# EUROPEAN PATENT SPECIFICATION

(11) **EP 0 487 746 B1**
(45) Date of publication and mention of the grant of the patent: **29.03.1995**
(21) Application number: 91910853.0
(22) Date of filing: 19.06.1991
(51) Int. Cl.: B29C 45/26

(54) **METHOD OF FORMING MODULE COVER OF AIR BAG DEVICE**
VERFAHREN ZUM HERSTELLEN EINER MODULARABDECKUNG FÜR EINE LUFTSACKVORRICHTUNG
PROCEDE DE FABRICATION D'UN COUVERCLE MODULAIRE POUR DISPOSITIF A COUSSINET PNEUMATIQUE DE SECURITE

(30) Priority: 20.06.1990 JP 161796/90
(43) Date of publication of application: 03.06.1992
(73) Proprietor: TAKATA CORPORATION, Minato-ku, Tokyo 106 (JP)
(72) Inventor: SAWADA, Masami, Hikone-shi, Shiga 522-02 (JP); NANBU, Yuichi, Echi-gun, Shiga 529-13 (JP); ZUSHI, Takayasu, Hikone-shi, Shiga 522 (JP)
(74) Representative: Goddard, David John
(86) International application number: JP9100819
(87) International publication number: WO9119600

(56) References cited:
- WO-A-88/08782
- DE-A- 1 916 910
- JP-A- 1 122 753
- JP-A-63 199 149
- JP-A-63 251 351
- JP-A-63 251 353
- JP-U- 5 770 823

## Description

This invention relates to a method of molding a modular cover for an air bag device. More particularly, it is an improved method for the injection molding of a synthetic resin modular cover for an air bag device having a tear line along which the cover is torn open, according to the preamble of claim 1 and known from JP-A-63251351.

### BACKGROUND ART:

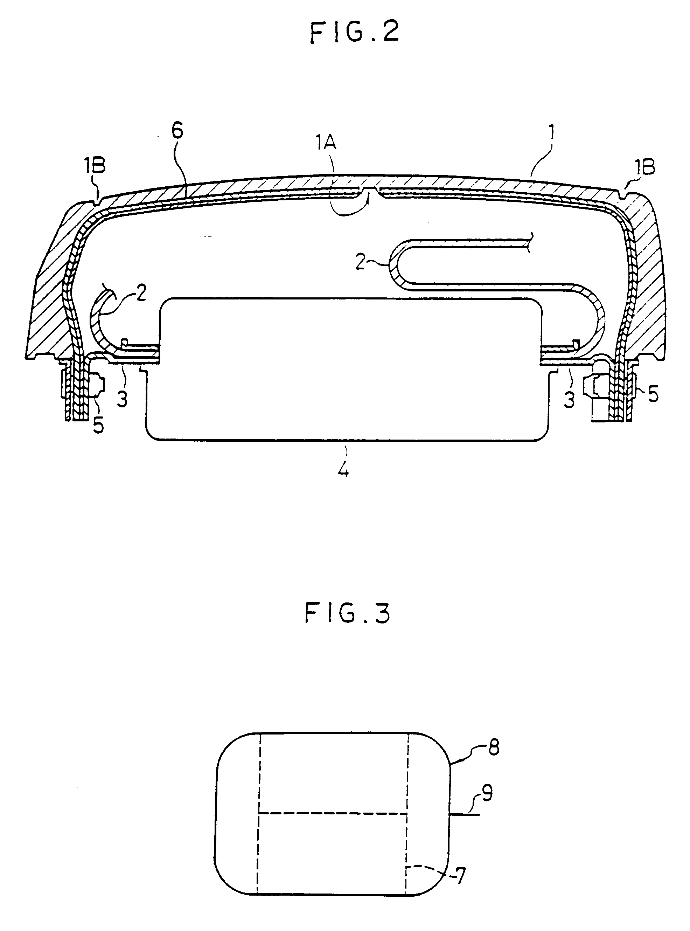

An air bag device has an air bag which is rapidly inflated in cases of emergency, such as the collision of a vehicle, as is well known. The air bag 2 is normally kept in a folded shape and enclosed in a modular cover 1, as shown in Figure 2. The air bag 2 is held by a mounting plate 3 called a retainer, to which an inflator 4 is also attached. The modular cover 1 is secured to the mounting plate 3 by rivets 5, or screws or bolts, or the like.

The modular cover 1 has a tear line 1A in the form of a groove along which it is torn and opened to enable the inflation of the air bag 2. That portion of the cover along which the tear line 1A extends is of lower strength than the remaining portion thereof and is an appropriately shaped portion having a small thickness (usually in the range of, say, 0.5 to 1.0 mm). When it is necessary to inflate the air bag 2, the modular cover 1 is torn open along the tear line 1A.

As a very large tensile force acts upon the modular cover to tear it open, a fabric insert 6 is embedded in the modular cover 1 to impart the necessary tensile strength to that portion of the modular cover 1 along which the tear line 1A lies. Figure 2 shows also a decorative line 1B.

It has hitherto been usual to inject an integral skin urethane foam, or a thermoplastic resin into an appropriately shaped mold to make a modular cover for an air bag. Figure 3 is a schematic top plan view of a typical mold. The mold 8 has ridges 7 for forming tear lines. The resin is usually injected into the mold through a single gate 9.

The mold has a cavity thickness which is smaller in its portions provided with the ridges than in the rest thereof. Therefore, the resinous material which has been injected into the mold fails to flow smoothly at the ridges, resulting in defective molding.

If a urethane foam is used as the resinous material, the feedstock forms a turbulent flow at the ridges and the air thereby entrained forms voids, pinholes, etc on both sides of a molded product. The product has defects, such as a short thickness and a low urethane density, in the mold portion remote from the gate. If a thermoplastic resin is used, a molded product thereof has flow marks and a short thickness at the ridges. It is necessary to employ a higher injection pressure to avoid those defects and it is also necessary to use a resinous material of higher flowability.

It is necessary that a tear line be so formed on a modular cover for an air bag that the cover may have along the tear line a sufficiently small thickness to be quickly torn open to enable the inflation of the air bag, and also a sufficiently high strength not to be easily torn by an external force in any normal situation. Thus, there has been a strong desire for a method which enables modular covers for air bags having tear lines ensuring a sufficiently small thickness and a sufficiently high strength to be manufactured at a high yield without having any molding or other defect.

WO-A-8808792 and De-A-1916910 both describe molding methods for container closures for food stuffs and the like having a panel which may be removed by rupture of a tear line. However, the teachings are specific to the closure art.

### DISCLOSURE OF THE INVENTION:

Under these circumstances, it is an object of this invention to provide a molding method which can manufacture efficiently at a high yield modular covers for air bag devices having excellently featured tear lines.

This object is attained by a method for injection molding of a synthetic resin modular cover of an air bag device with tear lines, the method comprising the steps of preparing a mold to define therein a cavity for the synthetic resin modular cover, said cavity having an elongated rectangular shape in plan, said mold including a first ridge extending substantially through a center of the cavity in a longitudinal direction of the cover and second and third ridges extending perpendicularly to the first ridge and intersecting respective ends so that the cavity is formed of four cavity portions divided by the first, second and third ridges said method being characterized in that said mold has four gates communicating with the respective four cavity portions and a synthetic resin is injected into the mold simultaneously through the four gates so that the four cavity portions are substantially filled with the synthetic resin flowing through the respective gates attached thereto and the synthetic resin does not substantially pass through the first, second and third ridges to thereby provide the tear lines having a desired thickness and high density, free of defects.

According to this invention, the mold has a gate provided for each of four cavity portions divided from one another by ridges for forming tear lines, and a resin is injected into the cavity through the four gates simultaneously, so that the mold can be filled with the resin efficiently. Even if the resin which has been injected through a gate into one cavity portion may be prevented by a ridge from flowing smoothly into another cavity portion, the resin which has been injected through another gate fills the other cavity portion effectively. The resin flowing in two directions toward a ridge does not form any turbulence at the ridge, even if a urethane foam may be employed. The use of four gates enables the resin to fill the mold effectively, and thereby ensures the manufacture of a product which is free from any defect such as a short thickness or a low urethane density. It also enables a thermoplastic resin to make a product which is free from any flow mark, or short thickness.

The mold can be filled with the resin effectively, even if it may have at the ridges a sufficiently small cavity thickness to permit the formation of tear lines along which a molded product has a satisfactorily small thickness. The molded cover has along the tear lines a sufficiently small thickness to be quickly torn open to enable the inflation of an air bag, but is sufficiently strong not to be torn at any time when no necessity exists, since it has a sufficiently high resin density and is free from any voids, pinhole, flow mark, or other defect.

Thus, this invention enables the efficient manufacture at a high yield of modular covers for air bags which are excellent in both strength and tearability, and are free from any molding defect.

### BRIEF DESCRIPTION OF THE DRAWINGS:

Figure 1 shows a schematic top plan view of a mold which is employed for carrying out the method embodying this invention for molding a modular cover for an air bag device;
Figure 2 is a cross sectional view of an air bag device; and
Figure 3 is a schematic top plan view of a conventional mold.

### BEST MODE OF CARRYING OUT THE INVENTION:

Description will now be made of a mode of carrying out this invention with reference to the drawings.

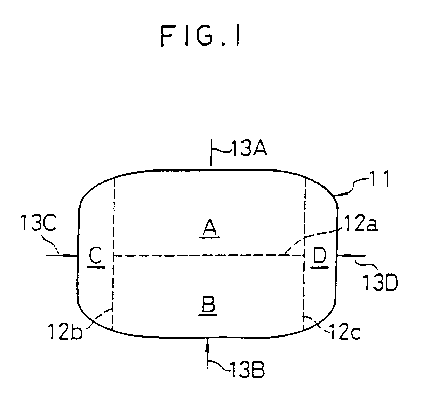

Figure 1 shows a schematic top plan view of a mold which illustrates the method embodying this invention for molding a modular cover for an air bag device.

Referring to Figure 1, the mold 11 has on its inner surface a ridge 12a extending along the longitudinal centerline of the mold and two ridges 12b and 12c extending along the transverse edges of the mold. The ridges 12a to 12c divide the cavity of the mold 11 into four cavity portions A, B, C and D which are each provided with a gate 13A, 13B, 13C or 13D. A resin is injected into the cavity through the gates 13A to 13D simultaneously. This arrangement enables the smooth and efficient filling of the mold with the resin, as the resin which has been injected through each gate flows into the corresponding cavity portion.

This invention is characterized by employing a mold having a plurality of appropriately positioned gates as hereinabove described, and can otherwise be carried out by following any ordinary method for injection molding, including the injection conditions which can be selected as desired. This invention can be used to mold a product having a single color, or a product having two or more colors. A fabric insert (not shown) can be placed in the mold before the injection of the resin, if required.

### INDUSTRIAL UTILITY:

As is obvious from the foregoing description, the method of this invention enables the efficient manufacture at a high yield of satisfactorily molded modular covers for air bag devices having tear lines along which the cover has a sufficiently small thickness to be easily torn when necessity exists, but is not torn at any time when no necessity exists.

## Claims

1. A method for injection molding of a synthetic resin modular cover of an air bag device with tear lines, comprising preparing a mold to define therein a cavity for the synthetic resin modular cover, said cavity having an elongated rectangular shape in plan, said mold including a first ridge (12a) extending substantially through a center of the cavity in a longitudinal direction of the cover and second and third ridges (12b, 12c) extending perpendicularly to the first ridge (12a) and intersecting respective ends so that the cavity is formed of four cavity portions (A, B, C, D) divided by the first, second and third ridges (12a, 12b, 12c),
said method being characterized in that
said mold has four gates (13A, 13B, 13C, 13D) communicating with the respective four cavity portions (A, B, C, D), and
a synthetic resin is injected into the mold simultaneously through the four gates so that the four cavity portions (A, B, C, D) are substantially filled with the synthetic resin flowing through the respective gates (13A, 13B, 13C, 13D) attached thereto and the synthetic resin does not substantially pass through the first, second third ridges (12a, 12b, 12c) to thereby provide the tear lines having a desired thickness and high density, free of defects.

2. A method as claimed in claim 1 characterised in that the thickness of said tear lines lies in the range from about 0.5mm to about 1mm.

## Patentansprüche

1. Verfahren zum Spritzgießen einer modularen Kunstharzabdeckung einer Luftsackeinrichtung mit Reißlinien, umfassend das Herstellen einer Form, um darin einen Hohlraum für die modulare Kunstharzabdeckung zu begrenzen, wobei der Hohlraum eine langgestreckte rechteckige Gestalt in der Aufsicht hat, wobei die Form eine erste Rippe (12a) aufweist, die sich im wesentlichen durch eine Mitte des Hohlraums in einer Längsrichtung der Abdeckung erstreckt, und eine zweite und dritte Rippe (12b, 12c), die sich senkrecht zu der ersten Rippe (12a) erstrecken und jeweilige Enden so schneiden, daß der Hohlraum aus vier Hohlraumteilen (A, B, C, D) ausgebildet ist, die durch die erste, zweite und dritte Rippe (12a, 12b, 12c) abgeteilt sind,
wobei das verfahren dadurch **gekennzeichnet** ist, daß
die Form vier Eingußkanäle (13A, 13B, 13C, 13D) hat, die mit den jeweiligen vier Hohlraumteilen (A, B, C, D) in Verbindung stehen, und
ein Kunstharz gleichzeitig durch die vier Eingußkanäle so in die Form eingespritzt wird, daß die vier Hohlraumteile (A, B, C, D) im wesentlichen mit dem Kunstharz gefüllt werden, das durch die jeweiligen Eingußkanäle (13A, 13B, 13C, 13D) fließt, die daran angebracht sind, und das Kunstharz im wesentlichen nicht durch die erste, zweite, dritte Rippe (12a, 12b, 12c) hindurchgeht, so daß dadurch die Reißlinien, die eine gewünschte Dicke und hohe Dichte haben, frei von Mängeln vorgesehen werden.

2. Verfahren nach Anspruch 1, dadurch **gekennzeichnet,** daß die Dicke der Reißlinien in dem Bereich von etwa 0,5 mm bis etwa 1 mm liegt.

## Revendications

1. Procédé pour mouler par injection un couvercle modulaire en résine synthétique d'un dispositif de coussin de sécurité possédant des lignes de déchirure, le procédé comprenant les phases consistant à préparer un moule pour y définir une empreinte pour le couvercle modulaire en résine synthétique, ladite empreinte ayant une forme rectangulaire allongée en plan, ledit moule comprenant une première nervure (12a) qui passe sensiblement par le centre de l'empreinte dans la direction longitudinale du couvercle et des deuxième et troisième nervures (12b, 12c) s'étendant perpendiculairement à la première nervure (12a) et qui coupent les extrémités respectives de celles-ci, de sorte que l'empreinte est formée de quatre portions d'empreinte (A, B, C, D) qui sont séparées par les première, deuxième et troisième nervures (12a, 12b, 12c), ledit procédé étant caractérisé en ce que le moule présente quatre entrées (13A, 13B, 13C, 13D) qui communiquent respectivement avec les quatre portions d'empreinte respectives (A, B, C, D) et une résine synthétique est injectée dans le moule simultanément à travers les quatres entrées, de sorte que les quatre portions d'empreinte (A, B, C, D) sont sensiblement remplies de la résine synthétique qui passe par les entrées respectives (13A, 13B, 13C, 13D) qui y sont fixées, et la résine synthétique ne franchit sensiblement pas les première, deuxième et troisième nervures (12a, 12b, 12c), de manière à produire les lignes de déchirure avec une épaisseur désirée, une haute densité et exemptes de défauts.

2. Procédé selon la revendication 1, caractérisé en ce que l'épaisseur desdites lignes de déchirure est dans l'intervalle d'environ 0,5 à 1,0 mm.
